# EUROPEAN PATENT SPECIFICATION

(11) **EP 2 124 413 B1**
(45) Date of publication and mention of the grant of the patent: **31.08.2011**
(21) Application number: 08009266.1
(22) Date of filing: 20.05.2008
(51) Int. Cl.: H04L 29/06

(54) **System and method for carrying out communication between a server and a user equipment**
System und Verfahren zur Ausführung von Kommunikation zwischen einem Server und einem Benutzergerät
Système et procédé pour effectuer une communication entre un serveur et équipement d'utilisateur

(43) Date of publication of application: 25.11.2009
(73) Proprietor: Vodafone Holding GmbH, 40213 Düsseldorf (DE)
(72) Inventor: Rodrigues, Bruno, D-40219 Düsseldorf (DE)
(74) Representative: Jostarndt, Hans-Dieter

(56) References cited:
- EP-A- 1 244 269
- WO-A-2008/033598

## Description

### Field of the invention

The invention relates to a communication system for carrying out a communication between a server and at least one user equipment.

### Background of the invention

It is known to increase the functionality of user equipments, especially mobile user equipments as for example mobile telephones by downloading content, especially related content (e.g. a html page with images, or a sequence of images from a gallery folder).

This occurs for example through a platform for mobile communication systems of the third generation as it is described in the specification TS 23.057 Version 6.2.0, (September 2003) of the 3rd Generation Partnership Project (3GPP).

Download of content occurs for example according to a communication between the user equipment and a content server, which is for example based on the Hypertext Transfer Protocol (HTTP). According to this communication the user equipment sends a request (HTTP-request) of a desired application to the content server.

According to information contained in a header of the request (request-header) the content server selects a content to be transferred to the user equipment.

Mobile wireless networks have higher latencies than fixed networks, due to the laws of physics.

This latency affects the standard HTTP protocol, which consists of individual Request-Responses, and specifically when the responses only include small pieces of content.

The HTTP protocol has redundant overhead, both on requests and the corresponding responses. E.g. when a small image is requested, both the request itself and the amount of headers on the response are usually bigger than the size of such an image. Whilst the amount of headers on the response can be relatively controlled and cut down to a bare minimum, the headers from the device are sent on each and every request, and most of those headers are fully redundant as they never change - e.g. "User-Agent" and the "Accept" header with a (sometimes huge) list of supported content types.

The Gateway (GW) introduces additional latency on the request and response because it behaves like a copy and forward proxy and only passes the request (or returns the response) when the whole content is received in it.

WO 2008/033598 A1 discloses a method and an apparatus for selecting and pushing customized electronic media content. Electronic media content is automatically selected for a user based on predetermined criteria, and the content is automatically downloaded at least Partly to a user device prior to a request for the content from the users. The electronic media content is particularly selected based on a current or future geographic location of the user, prior behaviour of the user (e.g. historical internet searches) and/or a demographic or psychographic characteristics of the user.

### Summary of the invention

It is an object of the present invention to allow for more efficient usage of bandwidth in a communication between a server and at least one user equipment. According to the invention, this object is achieved by a communication system according to claim 1, and by a method according to claim 7,

The invention proposes a communication system for carrying out a communication between a server and at least one user equipment, and more specifically a communication system capable of carrying out a plurality of communications between the server and several user equipments.

The invention uses the idea to increase the bandwidth efficiency on a network by decreasing the latency of request/response mechanisms.

The invention allows to handle requests which are meant to be performed in the background. This implies that the requests can be handled even if the user performs different tasks.

According to a preferred embodiment of the invention a device and/or application performs the requests asynchronously (syncing content between the device and the server), instead of typical browser request/response/render page.

This way the server can push relevant content for that moment (e.g. photos being shown to the user) as well as pre-push content that might be relevant later (e.g. photo details, contact information, etc.), in the most efficient way, meaning pushing a sequence of related pieces of content without any breaks in the middle.

Furthermore the invention enables a streaming of multimedia content. Request handling is optimized.

The invention enables a method with a communication in which the server always sends information to the user equipment. This makes use of full bandwidth. Preferably, the term "streaming" is used in the context of a single connection used to push a stream of pieces of content without breaks between them, by optimizing the list of contents to send in sequence. This is comparable to transmitting the requests parallel, which some devices do already via the browser, where the probability of having requests and responses being attempted to compete with the available bandwidth might provide an efficiency of almost 100% to a low value in case they all respond.

The current invention can operate with known technologies as well with further technologies.

It is preferable to push the requested content; the channel remaining always open. Another content can be put through.

According to the invention content is transferred in different objects. Objects according to the invention are data entities which can be adapted to several purposes. Examples of these objects are pictures, data files, software modules and even executable computer programs.

It is an objective of a further improvement of the invention to increase the bandwidth efficiency on the mobile network by decreasing the latency of the existing HTTP request/response mechanism. The user will not perceive it, mainly because these requests are meant to be performed in the background (e.g. synching data whilst the user is looking at something else).

The invention enables to decrease the dead periods where the full bandwidth is not being used.

The invention proposes a communication system for carrying out a communication between a server and at least one user equipment. Furthermore the invention comprises a method of communication between the server and the user equipment.

According to an embodiment of the invention the server contains a means for receiving requests of the user equipment, wherein at least some requests contain a demand for transferring an object, that the communication system furthermore contains a queue generator, that the communication system furthermore enables a streaming connection between the server and the user equipment and that the communication system contains a means for pushing the objects to the user equipment

According to a preferred embodiment of the communication system, the method and the server, the server contains the means for pushing the objects to the user equipment.

According to an embodiment of the invention, the communication system, a logical node, the server and/or the mobile user equipment contain a means for determining available bandwidth for the streaming connection.

According to a preferred embodiment of the invention the user equipment contains a means for opening the streaming connection to the server.

The invention contains several means for opening the streaming connection. For example the user equipment (client) opens the streaming connection to the server via HTTPS or via direct connection.

According to a preferred embodiment of the communication system, the method and the server, the communication system contains a selector which is capable of selecting objects which can be transferred from the server to the user equipment, wherein the selector is equipped in a way, that the determined available bandwidth is used as a parameter in the selection process.

According to a preferred embodiment of the communication system, the method, the server and the user equipment send requests to the server wherein at least some requests contain a demand for transferring an object, that the server receives the requests, that the server provides, that the objects are stored in a queue, and that the objects are pushed to the user equipment in a streaming connection.

According to a preferred embodiment of the invention a constant flow of objects from the server to the user equipment is enabled.

According to a further improvement of the invention the flow of objects is optimized in a way that a maximum of available bandwidth is used.

According to a preferred embodiment of the communication system, the method, the server and the user equipment, it is evaluated if objects in the queue are sufficient in order to keep the streaming connection opened. It is especially preferred, that keep-alive parts are transferred to the user equipment in order to keep the streaming connection alive.

Preferably parts received via the streaming connection are meant to be put into a local store/cache to be reused later by the application, when needed to show on screen.

A keep-alive part can be any piece of content with at least one byte and with a bogus content-location that doesn't map into any real content and gets stored in the cache but never used by the application. (e.g. location = /keep-alive, type=text/plain, data="footbar")

A usage of the keep-alive parts may depend on the connected network topology e.g. existency of wapgw/proxies, tcp/ip nat routers, etc.

The usage of the keep-alive parts as well as the periodicity of the packets can both be pre-configured to a specific network, when the network is known, or dynamically calculated by the server by checking if the connection even gets dropped, and for how long.

If for example the server tries to send a part to an established connection and the sending fails, the server checks when the last part was successfully sent and flags itself that fort that connection/ip/range of ips a keep alive is needed and the periodicity is some seconds less than the period between the successfull part and the failed part (ideally rounded to minutes / seconds minus some seconds, for example approximately 30 seconds, which is the usual connection drop configuration on such networks). If this connection drops again, a smaller period is used by the server.

According to a preferred embodiment of the invention the user equipment is configured to receive objects transferred from a server according to one of the preceding claims and to extract transmitted objects from the data stream.

The invention furthermore comprises a server which is capable of interacting in the communication system. The server contains a means for receiving requests of at least one user equipment, wherein at least some requests contain a demand for transferring an object and that the server is capable of interacting with means for enabling a streaming connection between the server and the user equipment

According to an embodiment of the invention a streaming method allows streaming of multiple content files at once without attempting to reconnect each content file to a portable terminal then multiple files are transmitted to the portable terminal from the streaming server, wherein at least two objects are streamed to the user equipment.

The invention includes different ways for implementing the streaming protocol.

Afterwards three solutions which are especially preferred are described.

An object of these solutions is to implement the streaming protocol.

One solution includes a method of a direct socket connection, bypassing the HTTP stack.

Preferred embodiment of this solution would imply reimplementing the HTTP stack on java client.

An embodiment of the invention includes a direct HTTP connection between the device and the server, without any proxy/wapgw in the middle.

Method three proposes to use HTTPS over the Wap GW.

Method three is advantageous, because HTTP over the WapGW/HTTP Proxy behaves as a store and forward and only returns the response to the device when the connection between the proxy and the server gets terminated. By using HTTPS, the proxy behaves as a simple TCP/IP router and passes all traffic between the device to the server, through such proxy, without any HTTP store and forward functionality.

An embodiment of the invention proposes a determination of a sequence of objects to be transferred from the server to the user equipment.

Furthermore the invention proposes to put these objects according to a certain sequence into the queue.

This embodiment involves the idea that the requests send from the user equipment (a client) to the server are evaluated and that - based on this evaluation - objects referring to the requests are selected.

Preferably this selection occurs with regard to available bandwidth.

A further embodiment of the invention includes a configuration of the user equipment and/or the server in order to evaluate priorities for the selection.

Furthermore a preferred embodiment of the invention proposes a configuration of the server or the user equipment to evaluate priorities for the sequence of objects to be put into the queue.

According to an implementation of the invention the server is configured in order to evaluate priorities for pushing the objects to the user equipment.

In an embodiment of the present invention an event is evaluated in order to iniciate a transfer of an object from the queue to the user equipment

One especially suitable parameter for the sequence of objects to be queued and/or transferred is information about available bandwidth for the transfer of the objects.

This embodiment has the advantage that the efficiency of the usage of the bandwidth is further increased.

The invention includes a variety of relations between the size of the objects and the queuing and/or a decision about a sequence of these objects.

The decision about the sequence performed by the application on the device and depends on what is being shown on screen.

For example, if the application is showing a list of photos, the device requests the server to send ,x' photos from the gallery ,y'.

If the user changes the screen to some other pages where the photos are not being shown, but now a list of persons, the device will inform the server to send a list of contact avatars, with a flag stating that these parts are now more important than the photos requested before. If the first request produced 10 photos and only 5 were returned, the server will not hold the remaining 5 photos on queue and starts delivering the new avatar parts before those 5 photso are returned.

These aforementioned and other aspects and advantages of the invention will be apparent from and elucidated with reference to the embodiments of the invention described hereinafter.

### Brief description of the drawings

Reference to preferred embodiments of the invention will be made by way of example to the accompanying drawings.
- Fig. 1: a schematic overview of a communication system, wherein a mobile user equipment is connected through a network with a server and
- Fig. 2: a schematic representation of request, response and data handling processes according to a preferred embodiment of the invention.

### Detailed description of embodiments

The description of the embodiments shows implementations of a multipart streaming which consists of a method for optimizing content delivery from a server platform to a mobile device connected via a wireless network, aiming at improving the delivery of multiple small content over high latency lines, whilst maintaining compatibility with common OpCo's network topologies (e.g. default browser APN and Wap GW), and leveraging existing standards (HTTP & multipart/mixed).

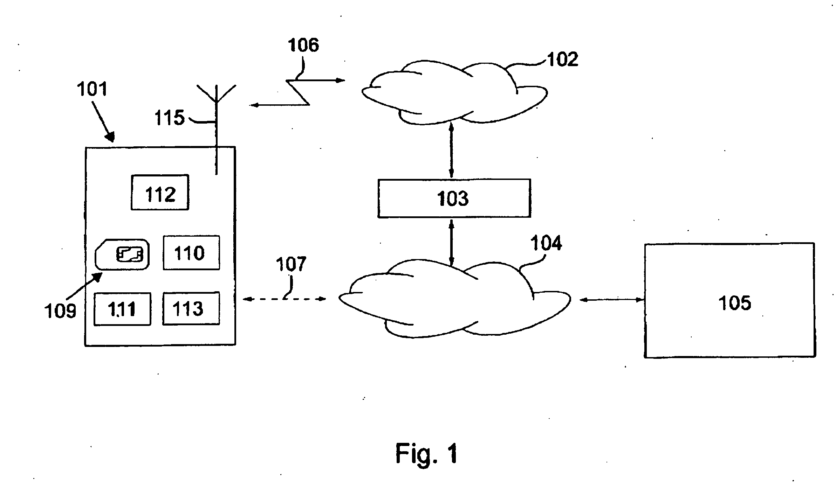

Fig. 1 shows a schematic representation of communication system and mobile user equipment according to the invention.

For those skilled in the art it is clear that the described functions are a selection of many means for carrying out the invention and implementing it.

Fig. 1 shows in a schematic overview a mobile user equipment 101. The mobile user equipment 101 is for example a mobile cellular telephone. The mobile user equipment 101 is connected with a server 105. Preferably an interactive connection between the mobile user equipment 101 and the server 105 is realized through a communication network. For example the network comprises a telecommunication network 102. The telecommunication network 102 relates the mobile user equipment through an air interface. The air interface 106 is for example a GSM network (GSM: Global System for Mobile Communications) or a UMTS network (UMTS: Universal Mobile Telecommunication System). The telecommunication network 102 is connected through a gateway 103 with a data network 104, The data network 104 is for example the internet or an intranet. The server 105 is connected to the data network 104.

Information for registering the user equipment in the telecommunication network 102 are stored in the user identification module 109. The user identification module is for example supplied by an operator of the telecommunication network 102. The user identification module 109 is for example a chip card, which is in relation with GSM networks known as SIM card (SIM: Subscriber Identification Module).

In relation with UMTS networks the user identification module 109 is called USIM card (USIM: Universal Subscriber Identification Module). The preferably mobile user equipment 101 further comprises a processor 110, which is connected to the user identification module 109.

The user equipment 101 may comprise further elements, for example a keypad or a keyboard 111, a graphical user interface 112 and a storage 113. Preferably the storage 113 comprises permanent and non-permanent storage areas.

The user equipment 101 preferably contains an antenna 115, which physically allows a connection to the telecommunication network 102 over the air interface 106.

The server 105 is for example a content server that is operated by a content provider. The content can be downloaded through the network 102, 103, 104 into the user equipment 101.

The content is transferred as objects. Examples of these objects are all types of data sets, as for example text data, graphical information as photographs or films as well as program modules. The program modules may be executable, especially executable on the user equipment 101 or in relation to the user equipment 101.

The server 105 is preferably operated by a content provider, which uses the server for making the content available.

Preferably the content is available over the network 102, 103, 104.

According to a preferred embodiment the user equipment 101 may download the content from the server 105 by using the network 102, 103, 104.

The above mentioned program modules may have the format of program code for software applications. These software applications are executable by the user equipment 101, especially with an utilization of an application runtime environment.

If HTTP is used for carrying out requests, a demand for content, respectively for objects with embedded content, HTTP requests are generated witch a request header and a data area. The data area contains especially information specific content (information) that is requested.

The request header especially contains information about the configuration of the user equipment 101.

It is preferable that the requests for obtaining content (objects) from the server is related with identification data. The identification data may be contained in the header of the request.

Advantageously this embodiment uses the standards from HTTP, namely the URL on the request, and the Content-Location or Content-ID headers on the responses.

The invention can be implemented with various communication systems, user equipments, servers, networks operating them and with a variety of operating parameters.

These parameters can be adapted in order to allow a multipart streaming.

The "Multipart Streaming" embodiment relates to avoid the negative effects of the network latency by moving away from the individual request-response paradigm, to a streaming channel plus a signalling channel.

The user equipment (client) opens a connection to the server. The server keeps the connection open using keep-alive parts (if needed), and pushes real content through that channel. In parallel, the client does a request, this time using a standard HTTP request-response, where the client requests one or more resources in the same request, including optional priority levels for each resource, to which the server responds with a small acknowledge (or rejection). Then the server retrieves the requested resources, puts them into an ordered queue (looking at the priority level), and pushes each piece of content back through the streaming channel previously open.

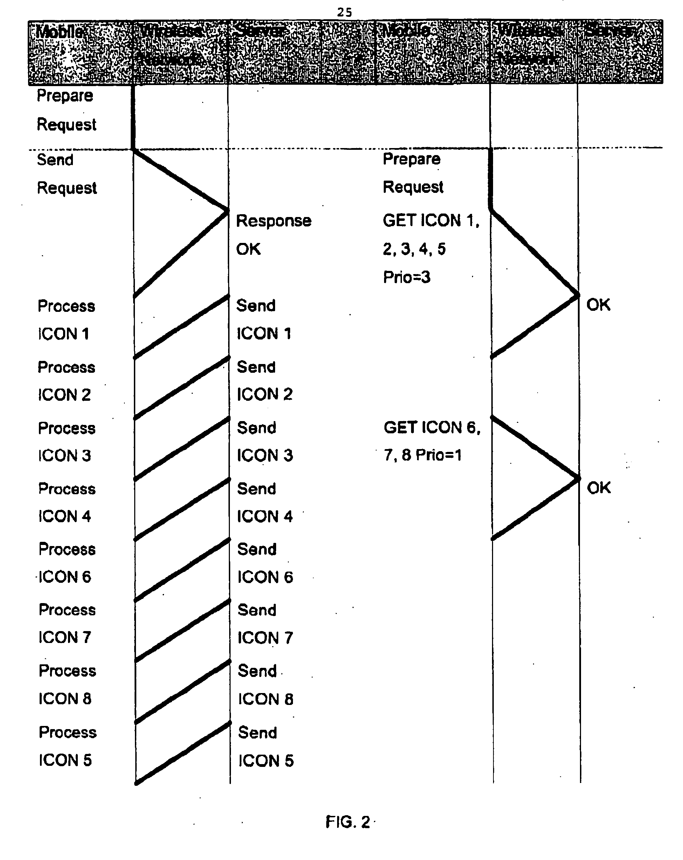

The left part of Fig. 2 shows a communication process according to the invention. Icons are transferred according to a certain sequence, which is different from the icon number.

Even the initial request (geticon 1-5) could mean a response of icon 2,3,1,5,4, in case the request of those icons from the server to the real content store retrieves 2 and 3 before 1,5 and 4.

A preferred sequence depends on the availability of the content, and can be returned out-of order (the content-location or content-id header will reference what is each part).

Also, sub-sequential requests from the device may change the order of the queue and push most-recent request content to be responded before the existing parts on queue.

Preferably the content markup (list of photos, textual or html) should be transfered before the real photos, when possible, or else the device will process the response of the image, put on the local store, according to a preferred embodiment of the invention, a graphical user interface, for example a screen remain unchanged until the markup gets received. This is a preferred optimization, as it can happen that the icons are ready to be delivered and the markup takes some time to be processed, thus the time to process the markup on the server is used to transfer already some images to the device.

The streaming bases on the concept that the content is transferred to the device and cached locally, so it can be reused later when the user accesses the same screen of the application.
- The icons according to Fig. 2 are only examples of objects according to the invention and that the icons can for example be replaced by other types of data or program codes or respectively even executable programs.

This includes for example a stream of small video or audio preview files, or it can be a list of contacts (vcard or xml or text based), where each contact is an individual part and can be sent in separate. Any kind of relevant content can be transferred.
- A combination of different types of objects in the possible streaming process, for example by creating a sequence with a combination of graphical data or program data is a preferred embodiment of this implementation.

The standard HTTP and multipart-mixed provides headers defining the content-type of each part (text, image, etc), the location/id of the item (so content can be transfered out-of-order), and even gzip/deflate headers signaling compressed content.

As stated above, according to a preferred embodiment of the invention the Wap GW behaves like a copy and forward proxy and only relays the response when the whole content is received.

If a Streaming connection is kept open, the Wap GW preferably does not return content back to the device.

A plurality of solutions exists to .implement streaming protocols on suitable networks, especially common operator networks.

Afterwards three especially preferred solutions to implement the streaming protocol on common operator networks (where common is using the default browsing APN, which usually only gives access to the external servers through the Wap GW, and only via HTTP or HTTPS proxying) are described:
- 1.: Connect the server inside the OpCo's network and have the terminal talk HTTP directly to the server. This will fail in most cases like e.g. Java J2ME applications, because for example the Wap GW (HTTP proxy) setting is defined by the mobile platform and the application can't decide itself not to use the Wap GW for some particular requests. This would also require changes on the OpCo's firewalls, to give direct access from the terminal to the server, without going through the Wap GW.
- 2.: Connect the server inside the OpCo's network, and have a direct socket connection, by passing the HTTP stack. This would mean reimplementing the HTTP stack on Java clients, and having a non-standard port on the server side. The Java security model forbids HTTP connections to non-standard ports (HTTP=80, HTTPS=443) and uses the default Wap GW mobile platform settings. Direct socket connection might also not be fully supported by the device. This would also require changes on the OpCo's firewalls, to give direct access from the terminal to the server, without going through the Wap GW.
- 3.: Use HTTPS over the Wap GW. The HTTPS proxy standard allows a direct connection between the client and the server, using the proxy as a simple socket proxy, and letting the traffic flow directly from one point to the other. This allows the proposed "Multipart Streaming" protocol to work in all common OpCo's "browsing" APN configurations without any changes on the OpCo. The only concern might be in regards to Wap GW resources: if the service is used in a similar way as regular browsing, and it's not (almost) always on, and not used by all the customer bases at the same time, the load on the Wap GW would be similar to regular browsing (or even less, due to the optimisation and the single connection). If the service has a much bigger usage than regular browsing, option 2 should be carefully thought.

A variety of standards can be used for carrying out multipart streaming according to the invention.

A preferred embodiment of the "Multipart Streaming" uses the standard "multipart-mixed" (RFC 2046, RFC 2387) format to deliver each piece of content.

The application on the mobile receives the incoming multipart streaming content, and processes each part as soon as the whole part is received.

Afterwards advantages of the current invention over the known state of the art are explained according to a real case example.

The real case example is based on a mobile application that shows a carousel of photos loaded from the network. The customer can scroll through the carousel to see the next photos, up to the last, or scroll back to the previous photos, back to the first one.

We'll assume that each photo has a resolution similar to the device's screen (so it can be zoomed into the whole screen), and average of 10KB each.

By applying a known HTTP request-response implementation, and assuming that no image is cached yet on the device, the application would do a unique request for each photo.

The theoretical maximum speed on a 3G network, for these 10KB photos, and ignoring the HTTP headers overhead, would be 0.21 seconds for a 384Kbit connection, down to 1.25 seconds for a 64 Kbit connection. Real life tests on a 3G network show that the average time between creating a HTTP object on java, performing the request, letting the request reach the server (going through the Wap GW), getting the result back on the device, and processing the response (not including the processing of the image itself into an internal image representation), and for a 1 byte response, is between 0.5 and 1 seconds. This means that for each photo, each request-response would in average take around 1 second, assuming the best case and rounding down.

Alternatively, the server could return a multipart response with more than a single photo. Returning all photos is not feasible, as the mobile application wouldn't receive any content until the Wap GW receives the whole package, turning the user experience into a long delay followed by all photos being shown.

A compromise could be obtained by returning 'x' photos each time, but it would still have the one second' delay between each multipart request, and the photos would be shown to the user in chunks of 'x' photos.

Another alternative would be to do multiple requests in parallel, to retrieve multiple objects and mix the latency delays from one request with receiving content from another. As the timings from the client, the network, and the server itself, can't be controlled, this means a random efficiency between less than 100% of the available bandwidth (if the requests would be all sequentially aligned), and less than the standard request-response method (when all requests are being done or returned at the same time, the probability of network collisions, network delays, or packet retries, might happen). In practice, this just works for a low number of concurrent threads, but doesn't scale to more than a single digit of connections. As pointed out the previous paragraphs, implementation concepts using the standard request- response-method do not fully utilize the available bandwidth due to the idle "latency" pauses between requests. Although the latency slightly decreases when the available bandwidth increases, the relationship is not direct and the bandwidth vs. latency vs. time is also not a direct relation. In other words, with these alternatives, increasing the bandwidth doesn't proportionally reflect on less time spent getting the content.

The current invention includes a plurality of implementations to realize a constant stream of content (objects) from the server to the user equipment.

An especially preferred embodiment of the invention contains some, most or even all of the following steps:
- -: The client opens the "streaming" connection to the server, via HTTPS or via direct connection, going around the Wap GW. This is performed in parallel with the following tasks, so in practice it doesn't consume relevant time.
- -: The client does a standard HTTP request through the Wap GW, requesting "photos 1-x". The server returns an OK. This takes half a second, because the response is not relevant for this sequence.
- -: The server retrieves the requested photos and puts them in a queue (the latency on the server processing is not relevant, as it's the same as in the above solutions).
- -: The server pushes the first object back to the device, through the streaming connection. This first response takes 0.2 seconds (on 384Kbp) or 1.25 seconds (on 64Kbps) to reach the terminal application.
- -: The server keeps pushing the later objects through the pipe, in a continuous sequence. The latency between pushing each object on the server side (milliseconds) is reflected on the arrival of objects on the terminal.

This means that the first image is received after 0.5+0.2 = 0.7 seconds (384Kbps) or 0.5+1.25 = 1.75 seconds (64Kbps), and the later images are received each 02 or 1.25 seconds. This fully utilises the available bandwidth,

For those skilled in the art, it is clear, that the invention covers a much bigger scope of data.

It is highly preferable to adapt a range of parameters and data for carrying out the processes described before to the characteristics of the communication network, the server, the device and to the type of communication involved.

## Claims

1. Communication system for carrying out a communication between a server (105) and at least one user equipment (101), the communication system being configured to enable a streaming connection between the server (105) and the user equipment (101),
the server (105) containing a means for receiving requests of the user equipment (101), the requests containing demands for transferring objects, and the server being adapted to store the objects in a queue **characterized In that** the communication system contains a means for pushing the objects to the user equipment (101) through the previously opened streaming connection between the server (105) and the user equipment (101).

2. The communication system according to claim 1, **characterized in that** the means for pushing the objects to the user equipment (101) is contained in the server (105).

3. The communication system according to any of the preceding claims, **characterized in that** it contains a means for determining available bandwidth for the streaming connection.

4. The communication system according to any of the preceding claims, **characterized In that** it contains a selector which is capable of selecting objects which can be transferred from the server (105) to the user equipment (101), wherein the selector is equipped such that the determined available bandwidth is used as a parameter for the selection.

5. The communication system according to any of the preceding claims, **characterized in that** the server is configured to evaluate priorities for pushing the objects to the user equipment.

6. The communication system according to any of the preceding claims, **characterized in that** the user equipment (101) contains a means for opening the streaming connection to the server (105).

7. Method for carrying out a communication between a server (105) and at least one user equipment (101) in which
a streaming connection between the server (105) and the user equipment (101) is enabled,
the user equipment (101) sends requests to the server (105), the requests containing demands for transferring objects,
the server (105) receives the requests and stores the objects in a queue, **characterized in that** the objects are pushed to the user equipment (101) through the previously opened streaming connection between the server (105) and the user equipment (101).

8. The method according to claim 7, **characterized in that** a constant flow of objects from the server (105) to the user equipment (101) is enabled.

9. The method according to claim 8, **characterized in that** the flow of objects is optimized in a way that a maximum of available bandwidth is used.

10. The method according to any of the claims 7-9, **characterized in that** it is evaluated if objects in the queue are sufficient in order to keep the streaming connection open.

11. The method according to any of the claims 7-10, **characterized in that** keep-alive parts are transferred to the user equipment to keep the streaming connection alive.

12. The method according to any of the claims 7-11, **characterized in that** the server evaluates priorities for pushing the objects to the user equipment

13. The method according to any of the claims 7-11, **characterized in that** a request of the user equipment (101) changes the order of the queue such that content requested most recently is sent before existing parts of the queue.

## Patentansprüche

1. Kommunikationssystem zum Ausführen einer Kommunikation zwischen einem Server (105) und mindestens einer Nutzereinrichtung (101), wobei das Kommunikationssystem dafür konfiguriert ist, eine Streaming-Verbindung zwischen dem Server (105) und der Nutzereinrichtung (101) zu ermöglichen,
wobei der Server (105) ein Mittel zum Empfangen von Anforderungen der Nutzereinrichtung (101) enthält, wobei die Anforderungen Forderungen zum Übertragen von Objekten enthalten,
und wobei der Server zum Speichern der Objekte in einer Warteschlange ausgelegt ist,
**dadurch gekennzeichnet, dass** das Kommunikationssystem ein Mittel zum Schieben der Objekte zu der Nutzereinrichtung (101) über die zuvor geöffnete Streaming-Verbindung zwischen dem Server (105) und der Nutzereinrichtung (101) enthält.

2. Kommunikationssystem nach Anspruch 1, **dadurch gekennzeichnet, dass** das Mittel zum Schieben der Objekte zu der Nutzereinrichtung (101) in dem Server (105) enthalten ist.

3. Kommunikationssystem nach einem der vorhergehenden Ansprüche, **dadurch gekennzeichnet, dass** es ein Mittel zum Bestimmen einer verfügbaren Bandbreite für die Streaming-Verbindung enthält.

4. Kommunikationssystem nach einem der vorhergehenden Ansprüche, **dadurch gekennzeichnet, dass** es eine Auswahleinrichtung enthält, die Objekte auswählen kann, die von dem Server (105) zu der Nutzereinrichtung (101) übertragen werden können, wobei die Auswahleinrichtung so ausgestattet ist, dass die ermittelte verfügbare Bandbreite als ein Parameter für die Auswahl verwendet wird.

5. Kommunikationssystem nach einem der vorhergehenden Ansprüche, **dadurch gekennzeichnet, dass** der Server zum Bewerten von Prioritäten zum Schieben der Objekte zu der Nutzereinrichtung konfiguriert ist.

6. Kommunikationssystem nach einem der vorhergehenden Ansprüche, **dadurch gekennzeichnet, dass** die Nutzereinrichtung (101) ein Mittel zum Öffnen der Streaming-Verbindung zu dem Server (105) enthält.

7. Verfahren zum Ausführen einer Kommunikation zwischen einem Server (105) und mindestens einer Nutzereinrichtung (101), bei dem eine Streaming-Verbindung zwischen dem Server (105) und der Nutzereinrichtung (101) ermöglicht wird,
die Nutzereinrichtung (101) Anforderungen an den Server (105) sendet, wobei die Anforderungen Forderungen zum Übertragen von Objekten enthalten,
wobei der Server (105) die Anforderungen empfängt und die Objekte in einer Warteschlange speichert,
**dadurch gekennzeichnet, dass** die Objekte über die zuvor geöffnete Streaming-Verbindung zwischen dem Server (105) und der Nutzereinrichtung (101) zu der Nutzereinrichtung (101) geschoben werden.

8. Verfahren nach Anspruch 7, **dadurch gekennzeichnet, dass** ein konstanter Fluss von Objekten von dem Server (105) zu der Nutzereinrichtung (101) ermöglicht wird.

9. Verfahren nach Anspruch 8, **dadurch gekennzeichnet, dass** der Fluss von Objekten in einer Weise optimiert wird, dass ein Maximum an verfügbarer Bandbreite verwendet wird.

10. Verfahren nach einem der Ansprüche 7-9, **dadurch gekennzeichnet, dass** bewertet wird, ob die Objekte in der Warteschlange ausreichen, um die Streaming-Verbindung offen zu halten.

11. Verfahren nach einem der Ansprüche 7-10, **dadurch gekennzeichnet, dass** Erhaltungsteile zu der Nutzereinrichtung übertragen werden, um die Streaming-Verbindung aufrechtzuerhalten.

12. Verfahren nach einem der Ansprüche 7-11, **dadurch gekennzeichnet, dass** der Server Prioritäten zum Schieben der Objekte zu der Nutzereinrichtung bewertet.

13. Verfahren nach einem der Ansprüche 7-11, **dadurch gekennzeichnet, dass** eine Anforderung der Nutzereinrichtung (101) die Reihenfolge der Warteschlange in der Weise ändert, dass zuletzt angeforderter Inhalt vor vorhandenen Teilen der Warteschlange gesendet wird.

## Revendications

1. Système de communication destiné à mettre en oeuvre une communication entre un serveur (105) et au moins un appareil employé par un utilisateur (101), le système de communication étant configuré pour permettre une connexion de diffusion en flux entre le serveur (105) et l'appareil employé par l'utilisateur (101),
le serveur (105) comprenant un moyen de réception de requêtes de l'appareil employé par l'utilisateur (101), les requêtes contenant des demandes de transfert d'objets,
et le serveur étant adapté pour stocker les objets dans une file d'attente,
le système de communication étant **caractérisé en ce qu'**il comporte un moyen de distribution des objets à l'appareil employé par l'utilisateur (101) par l'intermédiaire de la connexion de diffusion en flux préalablement ouverte entre le serveur (105) et l'appareil employé par l'utilisateur (101).

2. Système de communication selon la revendication 1, **caractérisé en ce que** le moyen de distribution des objets à l'appareil employé par l'utilisateur (101) est intégré au serveur (105).

3. Système de communication selon l'une quelconque des revendications précédentes, **caractérisé en ce qu'**il comprend un moyen de détermination de la bande passante disponible pour la connexion de diffusion en flux.

4. Système de communication selon l'une quelconque des revendications précédentes, **caractérisé en ce qu'**il comprend un sélecteur capable de sélectionner des objets qui peuvent être transférés du serveur (105) à l'appareil employé par l'utilisateur (101),
le sélecteur étant équipé de manière à pouvoir utiliser la bande passante disponible déterminée en tant que paramètre de sélection.

5. Système de communication selon l'une quelconque des revendications précédentes, **caractérisé en ce que** le serveur est configuré pour évaluer des priorités pour la distribution des objets à l'appareil employé par l'utilisateur.

6. Système de communication selon l'une quelconque des revendications précédentes, **caractérisé en ce que** l'appareil employé par l'utilisateur (101) comprend un moyen d'ouverture de la connexion de diffusion en flux vers le serveur (105).

7. Procédé de mise en oeuvre d'une communication entre un serveur (105) et au moins un appareil employé par un utilisateur (101), dans lequel
une connexion de diffusion en flux entre le serveur (105) et l'appareil employé par l'utilisateur (101) est permise,
dans lequel l'appareil employé par l'utilisateur (101) envoie des requêtes au serveur (105), les requêtes contenant des demandes de transfert d'objets,
et dans lequel le serveur (105) reçoit les requêtes et stocke les objets dans une file d'attente,
**caractérisé en ce que** les objets sont distribués à l'appareil employé par l'utilisateur (101) par l'intermédiaire de la connexion de diffusion en flux préalablement ouverte entre le serveur (105) et l'appareil employé par l'utilisateur (101).

8. Procédé selon la revendication 7, **caractérisé en ce qu'**un flux d'objets constant est établi du serveur (105) à l'appareil employé par l'utilisateur (101).

9. Procédé selon la revendication 8, **caractérisé en ce que** le flux d'objets est optimisé de manière à utiliser la bande passante disponible maximale.

10. Procédé selon l'une quelconque des revendications 7 à 9, **caractérisé en ce qu'**une évaluation est effectuée pour déterminer si les objets de la file d'attente sont suffisants pour maintenir la connexion de diffusion en flux ouverte.

11. Procédé selon l'une quelconque des revendications 7 à 10, **caractérisé en ce que** des parties de maintien en activité sont transférées à l'appareil employé par l'utilisateur pour maintenir la connexion de diffusion en flux active.

12. Procédé selon l'une quelconque des revendications 7 à 11, **caractérisé en ce que** le serveur évalue des priorités pour distribuer les objets à l'appareil employé par l'utilisateur.

13. Procédé selon l'une quelconque des revendications 7 à 11, **caractérisé en ce qu'**une requête de l'appareil employé par l'utilisateur (101) modifie l'ordre de la file d'attente de telle sorte que le contenu requis en dernier soit envoyé avant des parties existantes de la file d'attente.
